# EUROPEAN PATENT APPLICATION

(11) **EP 2 978 223 A1**
(43) Date of publication of application: **27.01.2016**
(21) Application number: 13752802.2
(22) Date of filing: 21.03.2013
(51) Int. Cl.: H04N 19/50

(54) **VIDEO CODING DEVICE AND VIDEO CODING METHOD**

(30) Priority: 31.01.2013 JP 2013017606
(71) Applicant: Kabushiki Kaisha Toshiba, Minato-ku Tokyo 105-8001 (JP)
(72) Inventor: KAWASHIMA, Yuji, Tokyo 105-8001 (JP); KIKUCHI, Yoshihiro, Tokyo 105-8001 (JP)
(74) Representative: Henkel, Breuer & Partner
(86) International application number: PCT/JP2013/058164
(87) International publication number: WO 2014/119006

(57) **Abstract**

According to one embodiment, a moving image encoding device and a moving image encoding method improving encoding efficiency are provided. In the embodiment, moving image encoding device comprises control means. The control means generates a B picture by using a GOP structure enabling reference from a reference B picture in a GOP to another reference B picture in the GOP.

## Description

### Technical Field

The embodiment relates to a moving image encoding device and a moving image encoding method.

### Background Art

By introducing DPB (Decoded Picture Buffer), H.264 that is one of moving image encoding methods allows reference of a plurality of reference pictures. The introduction of the DPB contributes to improvement of the encoding efficiency in the H.264 specifications. The DPB restricts the number of the reference pictures by an upper limit of size, but allows reference to not only pictures that are close in time distance to the decoded picture but also remote pictures when it uses decoded picture marking processing or the like.

The moving image encoding methods of H.264 and others use I, P and B pictures. Generally, the quantity of generated codes decreases in the order of I picture, P picture and B picture. Therefore, as the B pictures increase, a code quantity of a stream decreases and encoding efficiency is improved.

In MPEG-2 that is one of the moving image encoding methods, a time distance to the picture referred by the B picture increases as the B pictures increase. In the MPEG-2 specifications, therefore, prediction about the B picture is relatively incorrect and encoding efficiency becomes low, as is already known. Therefore, H.264 has improved the encoding efficiency by introducing reference B pictures, i.e., pictures that allow reference from a B picture to a B picture.

The H.264 specifications in the ARIB standards define restrictions of a GOP (Group of Pictures) structure as follows for enabling random access reproduction, high-speed reproduction and others in broadcasting, distribution and others. An unreference B picture and a reference B picture are decoded immediately after an I picture or a P picture to be displayed immediately after it. It is assumed that the I picture or the P picture is in the same GOP as the unreference B picture or the reference B picture. The unreference B picture refers to only (a) a frame or a field pair of the I picture or the P picture immediately preceding or following it in the display order, or (b) a frame or a field pair of the reference B picture that immediately precedes or follows it in the display order and is closer than the I picture or the P picture immediately preceding or following it in the display order. The reference B picture refers to only (a) a frame or a field pair of the I picture or the P picture immediately preceding or following it in the display order, or (b) a field of the reference B picture forming the same frame.

A reference relationship between the B pictures based on constraints of the above GOP structure can take a hierarchical structure that allows only the reference from an upper layer to a lower layer. This necessarily enables the decoding of the picture in a certain layer provided that a picture at a lower layer is already decoded. The fast reproduction can use this hierarchical relationship.

### Citation List

### Non Patent Literature

Non Patent Literature 1:
ARIB STD-B32 Part 1, Appendix 2, Chapter3 3.6

### Summary of Invention

### Technical Problem

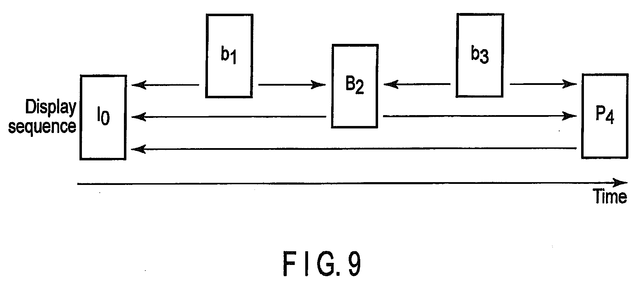

However, reference from an unreference B picture to a reference B picture is impossible under the constraints of the present GOP structure. FIG. 9 shows a GOP structure of each picture in a GOP that is an example in the H.264 specifications of the present ARIB standards. Based on the reference relationship between the pictures, I₀ and P₄ are in a zeroth layer, B₂ is in a first layer, and b₁ and b₃ are in a second layer. The zeroth layer is formed of the I pictures or the P pictures. The first layer is formed of the reference B pictures. The second layer is formed of the unreference B pictures. Therefore, the reference relationship between the B pictures merely takes a two-layer structure as shown in FIG. 9. Under the constraints of the present GOP structure, when a frame rate of the input image signal increases, the number of the I pictures or P pictures contained per unit time increases in proportion to the frame rate. Consequently, the encoding efficiency lowers. Therefore, even when the frame rate of the input image signal increases, the encoding efficiency can be further improved when the B pictures can be increased in number.

An object of the invention is to provide a moving image encoding device and a moving image encoding method further improving the encoding efficiency.

### Solution to Problem

In an embodiment, a moving image encoding device comprises control means. The control means generates a B picture by using a GOP structure enabling reference from a reference B picture in a GOP to another reference B picture in the GOP.

### Brief Description of Drawings

FIG. 1 is a block diagram showing a structure example of a moving image encoding device of the embodiment.
FIG. 2 shows a GOP structure of a reference B picture in the embodiment.
FIG. 3 shows a GOP structure of an unreference B picture in the embodiment.
FIG. 4 shows a GOP structure of each picture in a GOP in the embodiment.
FIG. 5 illustrates fast reproduction in the embodiment.
FIG. 6 illustrates fast reproduction of an example of the embodiment.
FIG. 7 illustrates fast reproduction in the embodiment.
FIG. 8 illustrates changing of a reproduction speed in the embodiment.
FIG. 9 shows a GOP structure for each picture contained in a GOP of an example in the H.264 specifications of the ARIB standards.

### Description of Embodiment

Hereinafter, an embodiment will be described in detail with reference to the drawings.

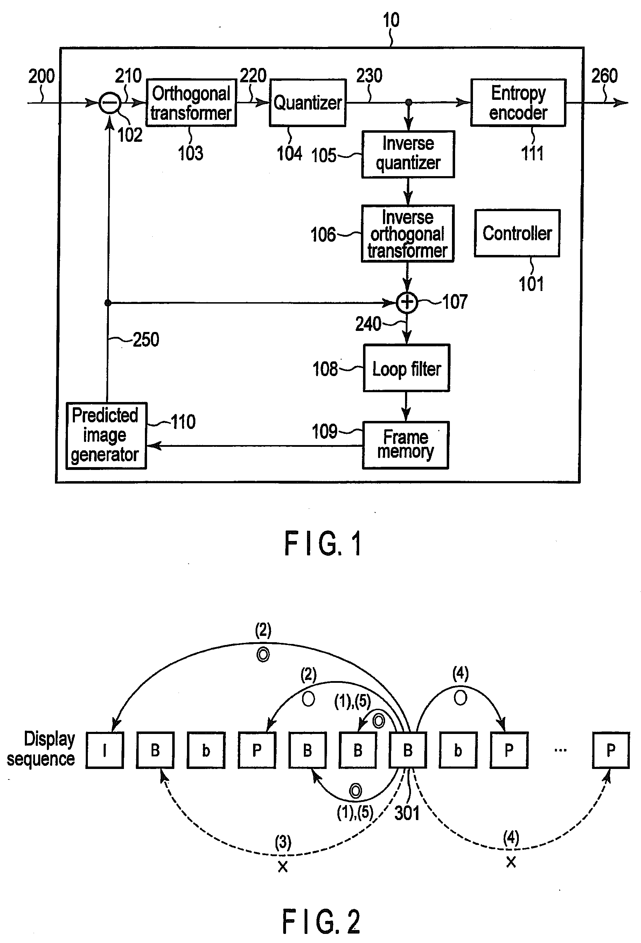

FIG. 1 is a block diagram showing a structure of a moving image encoding device of an embodiment. A moving image encoding device 10 generates an encoded bit row (encoded data) 260 from an input image signal (image data) 200. The moving image encoding device 10 comprises a controller (control means) 101, a subtracter 102, an orthogonal transformer 103, a quantizer 104, an inverse quantizer 105, an inverse orthogonal transformer 106, an adder 107, a loop filter 108, a frame memory 109, a predicted image generator 110 and an entropy encoder 111.

The controller 101 controls operations of various elements in the moving image encoding device 10.

The subtracter 102 externally receives an input image signal 200, and also receives a predicted image signal 250 from the predicted image generator 110 which will be described later. The subtracter 102 obtains a prediction error signal 210 by subtracting the predicted image signal 250 from the input image signal 200. The subtracter 102 outputs the prediction error signal 210 to the orthogonal transformer 102.

The orthogonal transformer 103 executes, e.g., discrete cosine transformation to obtain orthogonal transformation coefficient information 220 by orthogonally transforming the prediction error signal 210. The orthogonal transformer 103 outputs the orthogonal transformation coefficient information 220 to a quantizer 303.

The quantizer 104 quantizes the orthogonal transformation coefficient information 220 to obtain quantized orthogonal transformation coefficient information (quantized data) 230. The quantizer 104 outputs the quantized orthogonal transformation coefficient information 230 to the inverse quantizer 105 and the entropy encoder 111.

The inverse quantizer 105 and the inverse orthogonal transformer 106 locally decode the quantized orthogonal transformation coefficient information 230. The inverse orthogonal transformer 106 outputs the locally decoded quantized orthogonal transformation coefficient information 230 to the adder 107.

The adder 107 obtains a locally decoded image signal 240 by adding the predicted image signal 250 to the locally decoded quantized orthogonal transformation coefficient information 230. The adder 107 outputs the locally decoded image signal 240 to the loop filter 108. The locally decoded image signal 240 is supplied through a loop filter 306 to a frame memory 308.

The frame memory 109 supplies the locally decoded image signal 240 stored therein to the predicted image generator 110.

The predicted image generator 110 obtains the predicted image signal 250 based on the locally decoded image signal 240. The predicted image generator 110 outputs the predicted image signal 250 to a subtracter 301 and an adder 315.

The entropy encoder 111 obtains the encoded bit string 260 by encoding the quantized orthogonal transformation coefficient information 230. The entropy encoder 111 externally outputs the encoded bit string 260.

The moving image encoding device 10 generates the I picture, the P picture and the B picture, and generates the GOP formed of a plurality of pictures comprising at least one I picture as the encoded bit string 260. The encoding of only the picture in question generates the I picture. The encoding with the unidirectional prediction generates the P picture. The encoding with the bidirectional prediction generates the B. There are two kinds of B pictures, i.e., the B picture (reference B picture) which another picture can refer to and the B picture (unreference B picture) which another picture cannot refer to.

The restrictions on the GOP structure relating to the B picture defined in the embodiment will be described below. The controller 101 generates the B picture by using at least one of the following five restrictions (1) - (5) on the GOP structure relating to the B pictures. The I picture and the P picture in the following description represent the pictures in the same GOP as the unreference B picture or the reference B picture.
(1) The GOP structure allowing the reference from the reference B picture to the reference B picture. This GOP structure enables the reference from the reference B picture in one GOP to another reference B picture in the same GOP. The reference from the unreference B picture to the reference B picture is enabled as can be done in the prior art (H.264 specifications of the ARIB standards).
(2) The GOP structure allowing the reference from the B picture to the I or P picture preceding it in the display order. This GOP structure enables the reference in the GOP from the first B picture to the I or P picture preceding the first B picture in the display order. The B picture can refer to the I or P picture preceding it in the display order except for the conventionally allowed I or P picture immediately preceding it in the display order.
(3) The GOP structure disabling reference from the B picture to the B picture remoter in the display order than the immediately preceding P picture. This GOP structure disables the reference in the GOP from the first B picture to the second B picture remoter in the display order than the I picture or the P picture immediately preceding the first B picture.
(4) The GOP structure disabling reference from the B picture to the P picture remoter in the display order than the immediately following P picture. This GOP structure disables the reference in the GOP from the first B picture to another I picture or another P picture remoter in the display order than the I picture or the P picture immediately following the first B picture. In other words, among the I pictures or the P pictures following the first B picture in the display order in the GOP, this GOP structure performs the reference to only the I picture or the P picture immediately following the first B picture in the display order from the first B picture.
(5) The GOP structure performing reference from the B picture to only the reference B picture located closer than the I picture or the P picture immediately preceding or following the B picture in the display order. In other words, for the reference B pictures in the GOP, this GOP structure enables the reference in the GOP from the first B picture to the reference B picture closer in the display order than the I picture or the P picture immediately preceding or following the first B picture.

The possible maximum number of the frames or the field pairs of the continuous B pictures (unreference B pictures or reference B pictures) is e.g., seven in contrast to the conventional constraints.

FIG. 2 shows the GOP structure for the reference B pictures in the embodiment. The GOP structure will be described below based on a reference B picture 301. In FIG. 2, "I", "P" "B" and "b" represent the I picture, the P picture, the reference B picture and the unreference B picture, respectively. In FIG. 2, the pictures in one GOP are aligned in the order of display. Solid line arrows show examples of relationships between the reference B picture 301 of which reference is enabled by the foregoing restriction (1), (2), (4) or (5) and other pictures. A circle mark ("○") annexed to the solid line arrow indicates that the H.264 specifications of the ARIB standards also enable the reference. A double circle mark ("⊚") annexed to the solid line arrow indicates that the restriction defined in the embodiment enables the reference. A broken line arrow indicates an example of a relationship between the reference B picture 301 of which reference is disabled by the foregoing restriction (3) or (4) and other pictures. Numbers annexed to the arrows correspond to the numbers of the applied restrictions, respectively. "×" annexed to the arrow indicates that reference is disabled.

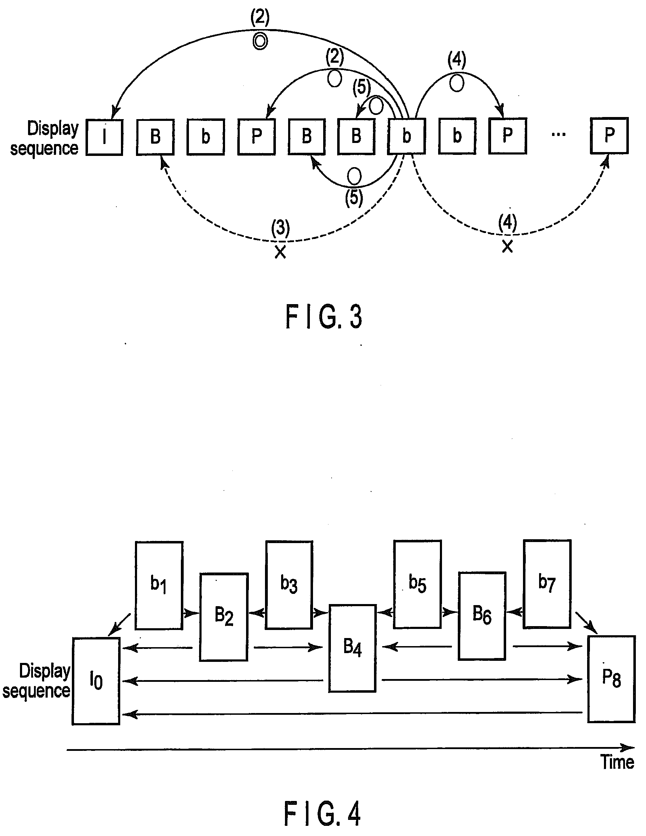

FIG. 3 shows the GOP structure of the unreference B picture of the embodiment. The GOP structure will be discussed based on an unreference B picture 302. In FIG. 3, "I", "P", "B" and "b" represent pictures similar to those in FIG. 2, respectively. In FIG. 3, the pictures in one GOP are aligned in the order of display. Solid line arrows show examples of relationships between the unreference B picture 302 of which reference is enabled by the foregoing restrictions (2), (4) or (5) and other pictures. A circle mark annexed to the solid line arrow indicates that the H.264 specifications of the ARIB standards also enable the reference. A double circle mark annexed to the solid line arrow indicates that the restriction defined in the embodiment enables the reference. A broken line arrow indicates an example of a relationship between the unreference B picture 301 of which reference is disabled by the foregoing restriction (3) or (4) and the other pictures. Numbers annexed to the arrows correspond to the numbers of the applied restrictions, respectively. "×" annexed to the arrow indicates that reference is disabled.

As shown in FIGS. 2 and 3, the pictures allowing the reference from the reference B picture and the pictures not allowing such reference are the same as the pictures allowing the reference from the unreference B picture and those not allowing the reference, respectively.

FIG. 4 shows the GOP structure of each picture in the GOP of the embodiment. In FIG. 4, the pictures in one GOP are aligned in the order of display. The arrows indicate the reference relationships between the pictures based on the restrictions (1) - (5). Based on the reference relationship between the pictures, I₀ and P₈ are in the zeroth layer, B₄ is in the first layer, B₂ and B₆ are in the second layer and b₁, b₃, b₅ and b₇ are in the third layer. The zeroth layer is formed of the I pictures or the P pictures. The first and second layers are formed of the reference B pictures. The third layer is formed of the unreference B pictures. Thus, the one GOP can take the GOP structure of the at least three layers between the B pictures. The reference relationship between the B pictures based on the restrictions (1) - (5) can take the hierarchical structure of the at least three or more layers enabling only the reference from the upper layer to the lower layer.

The decoder decodes the respective pictures based on an example of the GOP structure shown in FIG. 4, and displays them in the display order. The decoder normally reproduces the pictures by decoding and displaying all the pictures positioned in the zeroth to third layers in the one GOP in FIG. 4. The decoder can decode only the minimum necessary pictures in order to perform fast reproduction at a speed 2ⁿ times as fast as the normal reproduction speed already described with reference to FIG. 4.

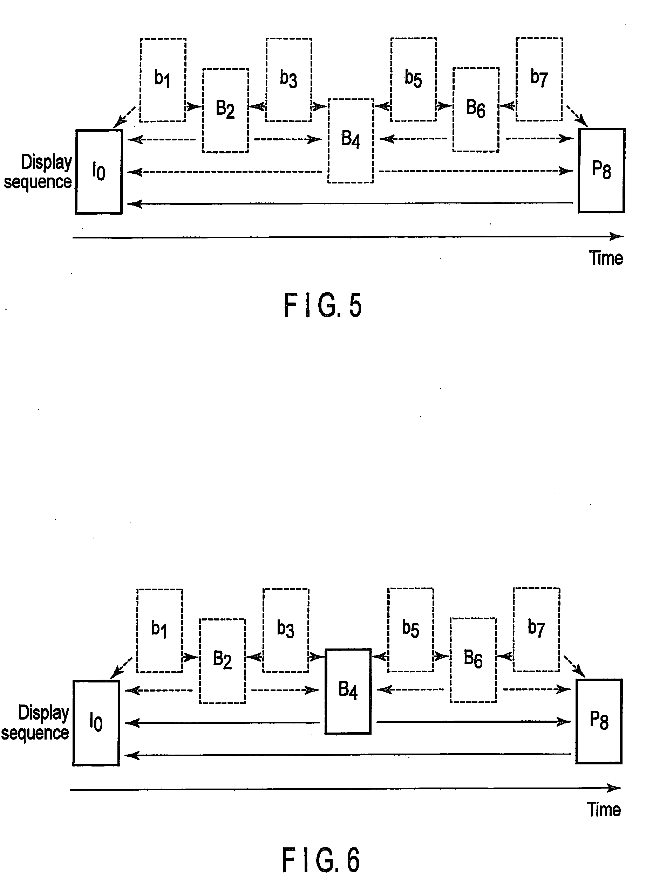

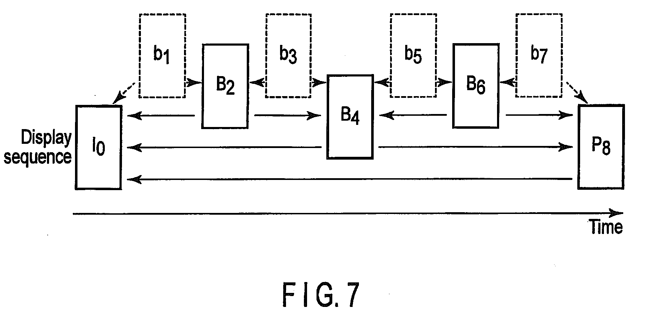

FIGS. 5 - 7 illustrate an example of the fast reproduction in the hierarchical structure shown in FIG. 4. In FIGS. 5 to 7, the pictures in the one GOP are aligned in the display order similarly to FIG. 4. The arrows indicate the reference relationships between the pictures based on the restrictions (1) - (5). The solid lines in FIGS. 5 to 7 indicate the pictures used for the fast reproduction and the reference relationships. The broken lines in FIGS. 5 to 7 indicate the pictures not used for the fast reproduction and the reference relationships. The fast reproduction in FIG. 5 decodes and displays only the pictures located in the zeroth layer. The fast reproduction in FIG. 6 decodes and displays only the pictures located in the zeroth and first layers. The fast reproduction in FIG. 7 decodes and displays only the pictures located in the zeroth to second layers. The reproduction speed changes in accordance with the number of pictures to be decoded and displayed. Therefore, the reproduction speed increases in the order of the normal reproduction in FIG. 4, the fast reproduction in FIG. 7, the fast reproduction in FIG. 6 and the fast reproduction in FIG. 5.

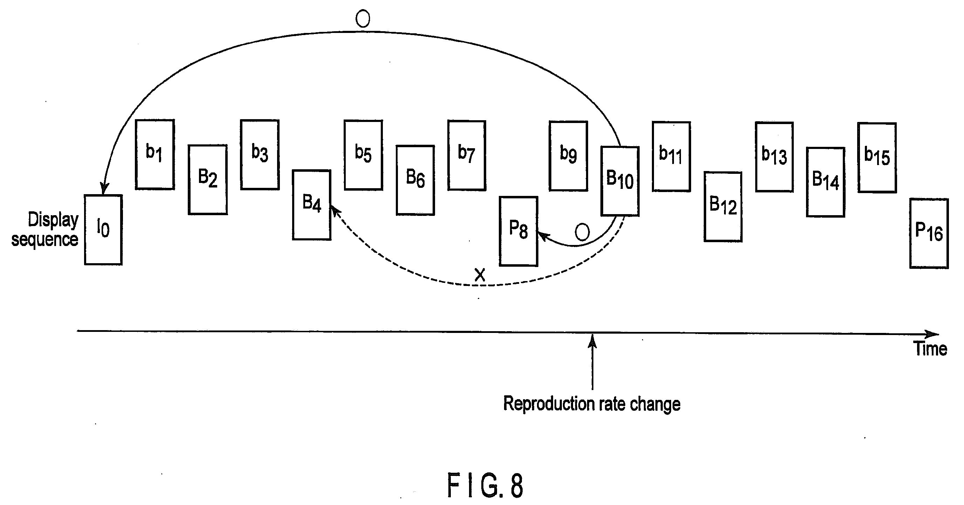

FIG. 8 shows an example to explain the reproduction speed changing. In FIG. 8, the pictures in the one GOP are aligned in the order of the display. In connection with B₁₀, arrows indicate a part of reference relationships based on the above restrictions. Solid line arrows show examples of relationships between B₁₀ allowing the reference and other pictures. A circle mark indicates that the reference is allowed. A broken line arrow indicates an example of a relationship between B₁₀ not allowing the reference and the other picture. A mark "×" indicates that the reference is not enabled. For example, the decoder performs the fast reproduction of the pictures in positions from I₀ to that immediately preceding B₁₀ by decoding only the pictures in the zeroth layer already described with reference to FIG. 5. For example, at the position immediately before B₁₀, the reproduction speed is reduced to the normal reproduction speed for reproducing the pictures in the zeroth to third layers already described with reference to FIG. 4. The restriction (3) disables B₁₀ to refer to B₄. Therefore, the decoder is not required to decode the undecoded B₄ for decoding B₁₀. However, B₁₀ can refer to not only P₈ but also I₀ which are decoded in the fast reproduction based on the restrictions (2). The decoder is not required to decode the undecoded picture only for the purpose of decoding B₁₀, and therefore the reproduction speed can be switched easily.

The restrictions (1) - (5) enable the GOP structure of the at least three layers between the B pictures. Primarily, the restrictions (1), (2) and (5) can maintain the encoding efficiency as far as possible or can improve it. Primarily based on the restrictions (3) and (4), the decoder can reproduce fast the encoded bit strings at 2ⁿ times the normal speed, and can easily change the reproduction speed. In the embodiment, therefore, even when the frame rate of the input image signal increases, the moving image encoding device 10 can maintain the encoding efficiency as far as possible or can improve the efficiency without increasing the number of the I pictures or the P pictures included per time, and it can also generate the encoded bit strings allowing the fast reproduction by the decoder.

Although the embodiments of the invention have been described, these are described by way of example, and do not restrict the scope of the invention. These new embodiments can be embodied in various forms, and various abbreviations, replacements and/or modifications may be made without departing from the spirit and scope of the invention. These embodiments and the modifications thereof are contained in the scope and substance of the invention, and are contained in the invention described in the appended claims and the equivalent scope.

### Reference Signs List

10 moving image encoding device, 101 controller (control means), 102 subtracter, 103 orthogonal transformer, 104 quantizer, 105 inverse quantizer, 106 inverse orthogonal transformer, 107 adder, 108 loop filter, 109 frame memory, 110 predicted image generator, 111 entropy encoder

## Claims

1. A moving image encoding device comprising:
control means for controlling to generate a B picture by using a GOP structure enabling reference from a reference B picture in one GOP to another reference B picture in the GOP.

2. The moving image encoding device of claim 1, wherein the control means generates the B picture by using the GOP structure enabling reference from a first B picture to an I picture or a P picture preceding the first B picture in a display order in the GOP.

3. The moving image encoding device of claim 2, wherein the control means generates a B picture from the first B picture in the GOP by using a GOP structure disabling reference to a second B picture remoter in the display order than an I picture or a P picture immediately preceding the first B picture.

4. The moving image encoding device of claim 3, wherein the control means generates a B picture from the first B picture in the GOP by using a GOP structure disabling reference to another I picture or another P picture remoter in the display order than the I picture or the P picture immediately following the first B picture.

5. The moving image encoding device of claim 4, wherein the control means generates a B picture in the GOP by using a GOP structure allowing only the reference from the first B picture to the reference B picture closer in the display order than the I picture or the P picture immediately preceding or following the first B picture.

6. A moving image encoding method, generating a B picture by using a GOP structure enabling reference from a reference B picture in a GOP to another reference B picture in the GOP.
